# EUROPEAN PATENT SPECIFICATION

(11) **EP 1 389 027 B1**
(45) Date of publication and mention of the grant of the patent: **20.07.2011**
(21) Application number: 03018142.4
(22) Date of filing: 08.08.2003
(51) Int. Cl.: H04W 16/18

(54) **Method of using a composite energy emission information and control system for improved safety to site personnel**
Verfahren zur Verwendung eines zusammengesetzten Systems zur Information und Kontrolle über Energieabstrahlung zwecks erhöhter Sicherheit des Fachpersonals am Einsatzort
Procédé d'utilisation d'un système d'information et contrôle d'émissions d'énergie composite pour l'amélioration de la sécurité du personnel sur site

(30) Priority: 08.08.2002 US 215495
(43) Date of publication of application: 11.02.2004
(73) Proprietor: Williams, Douglas M., Del Mar, CA 92014 (US)
(72) Inventor: Williams, Douglas M., Del Mar, CA 92014 (US)
(74) Representative: Dennemeyer & Associates S.A.

(56) References cited:
- US-A- 6 021 316
- ANGELO G C ET AL: "Health and penetration issues in buildings with GSM base station antennas on top" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 May 1998 (1998-05-18), pages 450-454, XP010287820 ISBN: 0-7803-4320-4

## Description

### BACKGROUND OF THE INVENTION

### FIELD OF THE INVENTION:

This invention relates generally to information storage and retrieval systems and more particularly to such a system particularly adapted for the monitoring and control of energy transmission sites for worker safety.

### DESCRIPTION OF RELATED ART:

The following art defines the present state of this field:

ANGELO G C ET AL: "Health and penetration issues in buildings with GSM base station antennas on top" VEHICULAR TECHNOLOGY CONFERENCE 1998. VTC 98.48TH IEEE OTTAWA, ONT., CANADA 18-21 MAY 1998, NEWYOR, NY, IEEE, US, 18 May 1998 (1998-05-18), pages 450-454, ISBN: 0-7803-4320-4 discloses a computer implemented method computing the number of walls and floors of a building, crossed by the direct ray between an BS antenna and a mobile based on the buidling's 3D geometric representation, and attributes to each one a specific loss. The 3D radiation patterns of the antennas are taken into account.

US -A-6 021 316 discloses a method for determining path attenuation of radio waves in a radio system, in which at least a 2D vector map describing the environment of a base station is used for determining the coverage area of the base station of the system, and in which the strength of the emission of a transmitter is determined at various points in the environment, wherein a polygon area is calculated from the base stations environment described by the vector map, to which radio waves can propagate, wherein the strength of the emission of the transmitter is estimated at each location point of the transmitter to be examined in the polygon area determined by calculation, and wherein points of the polygon are determined in advance, the determined points are stored in a memory, and the stored points are read from the memory for calculating the polygon area for different location points of the transmitter.

Bouix et al., U.S. 5,297,193 describes a wireless telephone network includeing a distribution network having fixed stations and wireless digital telephones linked by radio to the fixed stations, an integrated services digital public switching telephone network to which each fixed station is connected by a user to user signaling channel, service control points connected to the public switching telephone network and each having a wireless telephone service subscriber database and a call processing device, and a service management system having a reference database. The network is maintained on a centralized basis by transmitting a maintenance message from a fixed station to a service control point over the user to user signaling channel in response to the fixed station detecting a fault, generating a maintenance ticket at the service control point, transmitting the maintenance ticket to the service control point, and storing the maintenance ticket in the database.

Gulledge, U.S. 5,490,204 describes an automated system that assesses the quality of service provided by a cellular radiotelephone system. The system uses apparatus located at a mobile station that remotely controls apparatus located at a fixed station. A cellular radiotelephone call is placed from the mobile station which is received at the fixed station. When the connection is established, commands are sent from the mobile station to the fixed station that configure and control the operation of the fixed station. Many calls between the mobile station and the fixed station are placed and received by the mobile station each under control of the mobile station. During each call, recordings are made of the progress of the call and the audio quality measurements obtained during the call from both the mobile and fixed stations perspectives. Audio quality measurements are made utilizing enhanced audio quality measurement techniques that allows simultaneous measurements of audio quality in both the uplink and downlink channels of a cellular radiotelephone call utilizing two test tones instead of the single test tone that is normally used. The results of a number of cellular radiotelephone calls are later combined to form a set of statistical indicators that effectively represent the quality of service provided by a cellular radiotelephone system. The system provides means for comparing the quality of service provided by competing cellular radiotelephone service providers and for comparing the quality of service provided by differing cellular radiotelephone technology types.

Remy, U.S. 6,091,950 describes a system and method to control a cellular radiocommunications network, in particular according to the GSM standard. The system of control includes fixed means for the recording and time-stamping of signalling information travelling through at least one interface among the various types of interfaces capable of being observed (such as, in particular, the Abis, A, "CCITT signalling system No. 7" and MAP interfaces); fixed means for the centralization of the recorded and time-stamped signalling data; means for the association of localization information with said signalling information so as to precisely localize segments of said cellular network located downline from each interface on which signalling information is recorded.

Sattar et al., U.S. 6,154,728 describes an apparatus, method and system for automatic and distributed inventory processing for remote communication sites, such as remote cellular sites. A system embodiment includes a central site having a central processor, such as a mobile switching center, and a multitude of remote communication sites, with each remote communication site having a plurality of field replaceable units; and further having a remote processor and a remote memory. The remote processor includes instructions for obtaining an address and status from the memory of each field replaceable unit within the remote communication site and for querying each field replaceable unit having a status not out of service to obtain its vintage information and its physical location information. In the preferred embodiment, the physical location information includes frame, shelf and slot locations, and the vintage information includes hardware and firmware versions. The inventory information may also be compiled into a database, preferably at the central site.

Bolduc et al., U.S. 6,157,841 describes a cellular phone network provides location-based information to a user of a cellular phone. The cellular phone network includes a plurality of antennas coupled to at least one server. The server is coupled to a database. Stored on the database is a plurality of location-based information that is indexed to the plurality of antennas. The cellular phone transmits communication signals to one of the antennas. A phone call is established between the server and the user, and the server receives an identification of the antenna that the user transmits to. The server then queries the database and retrieves information local to the user. This information is then presented to the user in the form of menus.

Miller et al., U.S. 6,181,912 describes a method and apparatus useful for determining the accumulated error in a user terminal dock in a satellite communications system. The satellite communications system includes a gateway, a satellite with a known position and known velocity, and a user terminal having a deskew buffer clocked by a user terminal clock. The method includes the steps of computing the one-way signal delay between the satellite and the user terminal, computing a desired deskew buffer delay based on the computed one-way signal delay and a predetermined maximum value of said one-way signal delay, and computing the accumulated error in the user terminal clock based on the desired deskew buffer delay and the actual deskew buffer delay.

Suutarinen, U.S. 6,219,544 describes a method of measuring radio path quality values (SQ) in a digital mobile telephone network (PLMN) comprising at least one mobile station (MS). In the method, co-ordinates (XY) of a measuring point are determined and transmitted to the mobile telephone network (PLMN). A mobile test device (TS) measures the radio path quality values (SQ) from a downlink transmission path. The mobile telephone network (PLMN) measures the radio path quality values (SQ) from an uplink transmission path. According to the invention, the mobile test device (TS) sends the results from said measurements to the mobile telephone network (PLMN) essentially without delay. The mobile telephone network (PLMN) receives the measurement results (SQ) sent by the mobile test device (TS) and combines them with its own measurement results (SQ) and with the co-ordinates (XY) of the measuring point essentially without delay. The mobile telephone network (PLMN, OMC) has access to the combined measurement results (SQ, XY) as soon as possible, whereby the measurement results can be used for instance for controlling the location of the test device (TS).

Yost et al., U.S. 6,256,490 describes a telecommunications system and method for providing a cell traffic supervision alarm within a base station (BS) to notify the operator at a Mobile Switching Center (MSC) serving the BS that the BS has had no traffic for a period of time that is unreasonably long. The definition of "unreasonably long" is tied to normal traffic patterns at the BS. An alarm threshold time, which is defined as time between the cessation of all traffic on a BS and the triggering of the alarm, can be calculated based upon a statistical analysis of the traffic history of the BS to determine a time interval such that the probability is acceptably small that under normal conditions the BS would have gone for that entire length of time with no traffic at all. At the expiration of the alarm threshold time, the alarm is activated.

Mintz, U.S. 6,266,527 describes a telecommunications system and method for measuring the bit error rate (BER) and power on up-link and down-link channels substantially simultaneously from a mobile terminal to enable real time analysis in the field. This can be accomplished by including an application within a memory in the mobile terminal, which can initiate Link Balance (LB) start and stop commands sent from the mobile terminal to the base station. The LB start command is sent from the MS to the base station, instructing the base station to measure the power and BER on the up-link and forward these measurements to the mobile terminal. Simultaneously, the mobile terminal can measure the power and BER on the down-link and determine the current location. The up-link measurements, down-link measurements, and location information can then be displayed to the technician in real time, either on the mobile terminal itself or on a laptop computer.

Obhan, U.S. 6,275,695 describes a spectrum yield management (SYM) system that manages available spectrum within a wireless communication system. The SYM system includes at least one computer and connections within the wireless communication system to other components of the wireless communication system. The SYM system collects real-time and potential loading information for the wireless communication system and receives system operator parameters. The SYM system may support a plurality of classes with each class having subscriber members that receives services commensurate with the class. The SYM system may also support a plurality of corridors within the wireless communication system, with each corridor including at least once cell/sector. The SYM system provides signals to the components of the wireless communication and to subscriber units to influence their operation in a manner that will realize system operator goals with respect to spectrum usage. Examples of such signals include service option signals which provide either an incentive for a subscriber to increase its use or a disincentive for the subscriber to reduce its use. The SYM system may also operate to provide reserved spectrum within the wireless communication system and to perform other functions in managing available spectrum.

Western et al., U.S. 6,278,879 describes a method including receiving at the base station a handover indication associated with a first mobile communication unit. Based on the handover indication, a desired handover power level for the first mobile communication unit is determined. Based on the desired handover power level, a communication link is established with the first mobile communication unit at an actual power level. A difference between the desired handover power level and the actual power level is calculated, and based on the difference, a transmit power of the base station is determined.

Molinari et al., U.S. 6,308,065 describes an apparatus for testing cellular base stations. A base station tester is connected to a control link between the base station controller and the cellular base station to receive the fixed signal. The fixed link signal contains a voice channel and a control channel that may be selectively monitored by the base station tester. The base station tester is also connected to the radio frequency (RF) output of the cellular base station to receive the RF signal from the cellular base station. Both the RF signal and the fixed link signal are obtained in a non-invasive manner such that the cellular base station may remain in service during the testing process. By monitoring the fixed link directly, the base station tester may evaluate directly the reaction of the cellular base station with its RF signal to the commands received from the fixed link to perform parametric transmitter measurements. The base station tester may further compare the information received from the voice channel with the information contained in the RF signal to perform parametric receiver measurements.

Almeida, EP 0928121 describes data manipulation and visualization tools for simulating the planning and operation of one or more cellsites within a wireless network include an integrated database of cellsite information such as topographical, architectural, and RF propagation data. The tools retrieve and manipulate this data through graphical user interface software executed by a computing device. Using the graphical user interface, a user may simulate the operational characteristics of a cellsite, such as an antenna adjustment at the cellsite, and view cellsite parameters on a computer screen, such as the resulting RF propagation patterns from the antenna adjustment.

The prior art teaches quality assessment systems for cellular networks, telecommunication systems for analyzing traffic history information, spectrum yield management systems, wireless network maintenance methods using databases, inventory processing for remote communication sites, and methods for determining transmit power of a base station; but does not teach a method for compiling exhaustive composite wireless power transmission information over a given area and the control of access to such using a certification protocols. The present invention fulfills these needs and provides further related advantages as described in the following summary.

### SUMMARY OF THE INVENTION

The present invention teaches certain benefits in construction and use which give rise to the objectives described below.

The present invention is a method for using an information storage and retrieval system according to claim 1. It includes establishing a database structure enabling the storage of information concerning the locations and utilization characteristics of wireless radio frequency (RF) transmitting facilities such as cell phone networks. Information concerning the locations and utilization characteristics of wireless transmitting facilities over a concentrated and generally wide area are input into the database structure to establish an exhaustive information database. Electronic access to the information database is made available over the Internet, to the systems' subscribers, referred to as "users" in this specification. Information requests are made by the users. Maximum Permissible Energy (MPE) maps and the data necessary to perform electromagnetic energy (EME) studies are created using the information database.

Access requests are also received and lock-out/tag-out orders related to the access request are issued using access certifications. Releases of access are made upon completion of access related activities, referred to as site management in this specification. The method provides greater worker safety regarding RF exposure to persons involved in site management.

The current federal system of protecting field workers from RF exposure is inadequate. The present system of signs to warn workers is ambiguous. In many instances warning signs are missing or poorly placed, and have text that is misrepresented or difficult to interpret. Sites that are used by plural wireless companies may have greater dangers due to overlap of energy dispersion patterns, and this is not taken into account by any one of the companies, primarily due to poor mutual information availability. Wireless carriers provide equipment and training to their workforce but do not provide the same to other workers such as roofers, painters or heating, ventilation and air-conditioning craftsmen who work near their emitters. Personal protection monitors have severe limitations and can give a false sense of security. Carriers have a poor policy regarding the hazards of RF exposure with site lessors. Little or no information is available to educate lessor's third party workers on safety procedures. Stealth sites can present the most potential hazards to unsuspecting third party workers. Third party workers are at the greatest risk of injury from RF exposure. There is no comprehensive worker safety program in place.

The present invention provides an improvement in the safety of all workers regarding RF exposure. Online emergency or maintenance lock-out/tag-outs can be effectively provided for.

To provide effective worker safety all active and interested parties should be involved, not just the carriers. It is not just the carriers that profit from the wireless industry. Up to the present time there hasn't been a method to involve all interested parties in a comprehensive worker safety program regarding RF exposure. The present invention provides the basis for this to be accomplished.

To this end, the invention provides a method according to claim 1. Further embodiments of the invention are described in the dependent claims.

The invention provides the information necessary to produce clear and concise diagrams of elevation and plan views of the MPE levels at all sites included. These overlay maps are inclusive of all wireless entities and their cumulative effects on any portion of a site. It provides the ability to print an MPE overlay map for any given site. Maps are provided to workers when they are scheduled for site work. The method provides the ability to eliminate the industry standard practice of general interpretation and guessing. The ability to request a lock-out/tag-out online from other wireless entities and receive a confirmation that acknowledges the request as stated; or receiving a proposed alternate date and time is a significant benefit and improvement to present methods. Automated daily updating of the database and MPE overlay maps is possible through the present invention method. This is an important feature with the rapid changes taking place at sites from multiple entities. An 800 number, designed after the well known "Dig Alert" is posted in English and Spanish at all sites to inform site workers and third-party tradesmen to call to obtain an MPE overlay map if they weren't issued one. The database includes all the necessary information to perform EME simulations without first visiting the site. This step saves considerable time and expense. Contact information for each site is maintained in the database, including names, phone numbers and hyperlink e-mail address of RF managers and operations managers. The method further includes a private instant messenger service between the users of the method.

In addition, the method streamlines the permit acquisition process and improves the public image of carriers.

Another objective is to provide such an invention capable of assuring safe utility maintenance in the wireless industry.

A further objective is to provide such an invention capable of assuring safety above that provided by personal protection monitors.

A still further objective is to provide such an invention capable of protecting third party workers.

A still further objective is to provide such an invention capable of providing baseline information for expansion and improvement planning.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

The accompanying drawings illustrate the present invention. In such drawings:

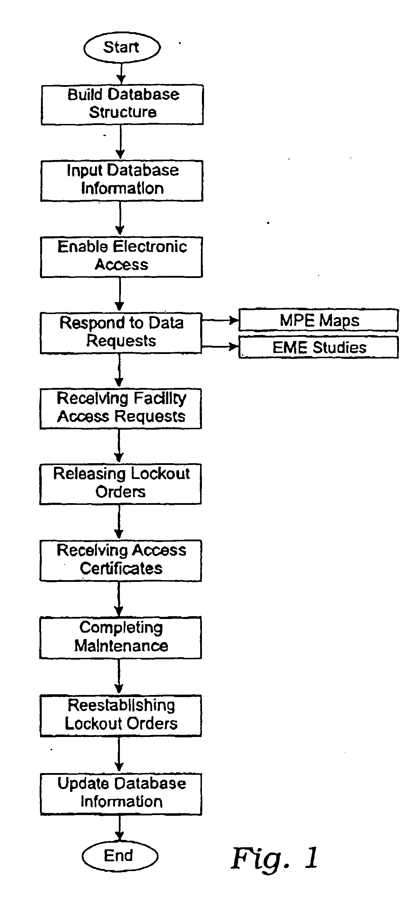

Figure 1 is a block diagram of the steps of the preferred embodiment of the present invention method;
Figure 2 is a sample MPE diagram thereof showing energy dispersion patterns in plan view; and
Figure 3 is a sample MPE diagram thereof showing energy dispersion patterns in elevational view; and
Figure 4 is a sample of a EME study prepared from information stored in a database thereof.

### DETAILED DESCRIPTION OF THE INVENTION

The above described drawing figures illustrate the invention in at least one of its preferred embodiments, which is further defined in detail in the following description.

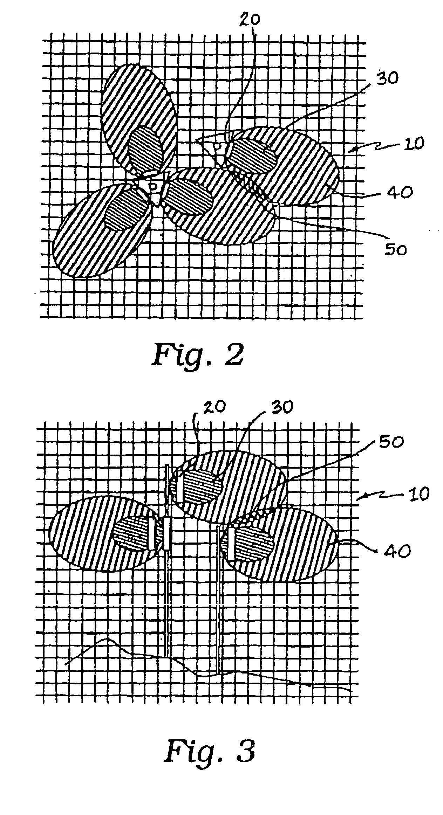

The present invention is an operating method using information about the public telecommunications industry to provide a high level of safety to workers and others who must be in the vicinity of RF emitters. A computer accessible database stores energy transmissions information including site specific physical locations and utilization characteristics of wireless transmitting facilities operating in the public telecommunications industry. Utilization characteristics include emissions energy levels and dispersion profiles, emissions time schedules of operations, azimuth and elevation details, and other information of use to workers planning to enter an RF energy emissions site. Accessing such information from carriers, i.e., those providing the hardware and emissions on the listed sites, is accomplished using standard data acquisition techniques that are well known in the art. Placing such information into a computer database is also well known in the art and could be accomplished by routine methods. Internet access to the database information is provided to certified registered users by techniques well known in data transmission using the Internet and could be carried out by routine steps. In use, the users of the database, i.e., site workers, managers, representatives of site carriers, and so on, access the database using the Internet and download several types of information that is stored in the database. Of importance is the ability, upon request, of preparing and downloading MPE overlay maps, as shown in Figs. 2 and 3. The present invention method compiles data stored within the database from information previously inputted, and creates the overlay maps of Figs. 2 and 3. This process is well known in the art. The maps are then downloaded to a user requestor using the Internet. This enables the user to enter the site with the current knowledge of where energy emission patterns are, where forbidden zones are located, and where it is safe to work. Should work need to be done within such forbidden zones or controlled access areas, it is then possible to obtain a lock-out/tag-out, i.e., a certified report that energy will not be emitted at certain times so that work may proceed.

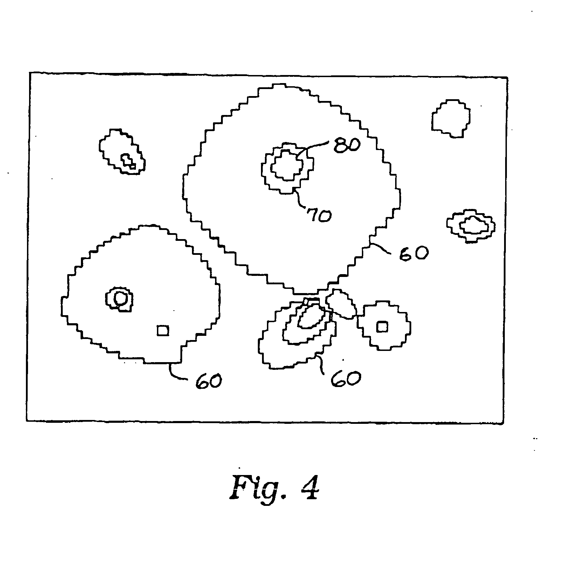

EME dispersion simulation information is also available in the same manner. Fig. 4 show a plan view map of simulation. The information is available from the database for those that wish to construct such a simulation map for planning purposes. Thus, the EME dispersion simulation usually takes into account a wider area of concern than the more focused MPE overlay. Utilization characteristics reports of any site are also available from the database information

The database information preferably includes an exhaustive compilation of such information for a defined geographical area. This is important since the cumulative effect of plural close-by emitters may not be known, knowable or considered by workers using present methods. Such lack of prudent knowledge can easily lead to harm to personnel.

The present method further includes releasing the lock-out/tag-out orders upon completion of site specific management. This is enabled by receiving contact information from site management following a lock-out/tag-out, that all personnel are clear. Such information is taken over the Internet and is certified using passwords so that only persons with such passwords issued with the lock-out/tag-out order are able to release the order.

Preferably, the MPE overlay maps include elevational (Fig. 3) and plan (Fig. 2) views of all site specific energy patterns 10 for each active antenna 20, wherein the energy patterns 10 include controlled areas 30 and caution zones 40. When overlaps between adjacent energy patterns 10 exists, the overlapping zones 50 are shown with double crosshatching to draw attention to this fact, since only through such a composite map can this phenomenon be known. As stated, the present invention method is the only means for such disclosure presently available. This is important since entry into the overlapping zone 50 can cause exposure to RF radiation at very high levels causing burns or other harm to personnel.

The EME dispersion simulation information is sufficient to prepare a simulation study. Such a study provides a topographical map (plan view) of the RF emitters in the area of interest. See Fig. 4. Elevational views of the same area are also possible from the information in the database. Such information includes exact location coordinates of each emitter, azimuth of the emitter, single or double lobe and dispersion patterns, energy levels and so on. The energy circumference 60 shown in Fig. 4 is a constant energy level line at an energy level of choice. For instance, the map of Fig. 4 may show the dispersion pattern for an energy level of 20 watts, sufficient to give a mild burn with extended exposure. In Fig. 4, in the largest dispersion pattern, the energy circumferences for 60 watts 70 and 100 watts 80 are also shown.

Clearly it is in the best interest of the provider of a security and safety service using the present invention method to have absolutely current information. When workers have upgraded a site, it is imperative that the database be immediately upgraded. When carriers upgrade energy levels or change schedules of RF emissions, it is equally important to upgrade the database information. This should be done on a daily basis and is the preferred method of the present invention.

The subscriber base (users) includes the major wireless carriers, municipalities, States and their agencies; building or property owners where transmitters exist, their property management companies and contractors. For purposes of updating database information, each of these entities is limited to access in the database only that portion related to assets directly under their control.

In the preferred manner of operating the present invention method, wireless carriers can access their single user and co-located sites in which they have an operating interest. Data available to them from the database information includes all data to perform an EME study and MPE mapping. Further, access of the database by each individual carrier includes geographical limitations. These restrictions are preferably by county, state, region and country. County wireless employees can only access the sites contained in the county or area in which they work. Each tier (tier = users with a common geographical area) has access to its own tier plus its underlying tiers. Compilation of all tiers is by geographical location. Municipalities are able to access all sites within their physical boundaries for only MPE mapping. Municipalities have a map page that shows the existing and proposed sites, integrated using a color code. Municipalities have a data entry page for proposed sites that are in the planning process and are able to convert to the existing database upon completion. Ticklers are sent once a month to each planner in each municipality to request the data entry of any new application or if no applications, a confirmation of that. Ticklers are sent every set number of days until responded to by the proper contact. If no response is received, a data page appears to advise the need for a phone contact. Building and property owners are only able to access their own information and data, and only for MPE mapping. Property managers are only be able to access the sites they manage and only for MPE mapping. Contractors are only be able to access the sites in which they have been contracted by one of the above entities to perform work. Contractors can access MPE mapping only with the permission of one of the above entities online. Contractors can access EME data only from one of the carriers. The above entities have a data entry page that contains fields for the contractors name, state license number, site number or APN, cancel access and a timeout limit. Timeout limits are set for one day to a maximum of one year, and can be canceled at anytime. MPE maps of all sites identify the carrier and its position on the site, a contact and phone number for scheduled and emergency lock-out/tag-outs. Prior to downloading an MPE map, a disclaimer page appears with specific verbiage acknowledging the importance of site safety etc. The user must enter a PIN to proceed. Every log-in is tracked and compiled from every entity and every task is recorded and stored. The data can be recovered and identified by the person logging on the task or by different tiers. Tracking information will only be available to the carriers at the corporate level and only to their specific sites. The tracking information will contain a login-logout time. stamp. Sites are identified by FCC number, street address, latitude & longitudes and APN. Only one of the identifiers is needed to access a particular site. Different entities are cataloged and logged in by initial(s) representing their group and then by a number representing their firm. For instance, Verizon™ would be WC 10, WC for wireless carrier and then the one-zero to represent Verizon™. Identifying the state and county would be the next entry, CA for California and then 001 for San Diego. The last entry is the individuals PIN, John Doe = 1234. The entry field for this example is, WC 10 - CAOO I - 1234. MU = municipalities, state = ST, site owner = SO, property managers = PM, prime contractors = PC, subcontractors = SC.

## Claims

1. A method for using an information storage and retrieval system to establish a database structure enabling the storage and manipulation of information concerning the locations and utilization characteristics of wireless radio frequency RF transmitting facilities and to identify and control energy emissions from such transmitting facilities to improve worker safety, the method comprising the steps of:
establishing a computer accessible database storing energy emissions information including site specific physical locations and utilization characteristics of wireless transmitting facilities;
providing Internet access to the database information to registered users;
preparing and downloading maximum permissible energy MPE level overlay maps from the database information of the site specific locations;
receiving a request from a registered user via the internet to access a forbidden zone or controlled access area of a specific site;
issuing a password in response to the request to access the forbidden zone or controlled access area (30), the password being required to resume energy emissions at the specific site;
issuing a certified report that energy will not be emitted during a certain time period for the specific site for site specific management, in response to the request from the registered user; and
receiving a confirmation that the forbidden zone or controlled access area (30) of the specific site is clear of personnel from a requesting party, wherein the confirmation includes a password that can be used to verify whether the requesting party is authorized to allow energy emissions to resume at the specific site; and
certifying that the emissions for the specific site can resume, wherein certifying that the emissions for the specific site can resume includes verifying that the password provided in the confirmation and the password issued in response to the request match before a certification that emissions for the specific site can resume.

2. The method of claim 1 further comprising preparing electromagnetic energy EME dispersion simulation information and utilization characteristics reports from the database information of the site specific locations.

3. The method of claim 1 further comprising the step of indicating that energy may be emitted at the specific site upon completion of site specific management.

4. The method of claim 1 wherein the MPE overlay maps include elevational and plan views of site specific energy patterns, wherein the energy patterns include forbidden zones and caution zones (40).

5. The method of claim 2 wherein the EME dispersion simulation information covers a larger geographic area than the MPE level overlay maps.

6. The method of claim 1 further including the step of updating the database information daily.

7. The method of claim 1 further including the step of updating the database information when changes are made to the sites included in the database.

8. The method of claim 1 wherein access to users is limited by geographical boundaries.

9. The method of claim 1 wherein users are compiled by tiers according to geographical location.

10. The method of claim 1 wherein ticklers are sent to users to acquire new data for inclusion in the database.

11. The method of claim 1 wherein a data entry page is used on line for acquiring at least one of user's name, state license number, or site number.

12. The method of claim 1 wherein MPE maps identify at least each carrier, equipment position on the site, a contact and phone number for scheduled and emergency power off.

## Patentansprüche

1. Verfahren zur Verwendung eines Systems zum Speichern und Abrufen von Informationen, um eine Datenbankstruktur anzulegen, die das Speichern und Handhaben von Informationen über Positionen und Verwendungseigenschaften von Radiofrequenz- (RF) Übertragungseinrichtungen ermöglichen, und um Energieemissionen von derartigen Übertragungseinrichtungen zu identifizieren und zu steuern, um die Sicherheit der Arbeiter zu verbessern, wobei das Verfahren folgende Schritte umfasst:
Anlegen einer Datenbank, die für einen Computer zugänglich ist und Energieemissionsinformationen speichert, welche standortspezifische physikalische Positionen und Verwendungseigenschaften von drahtlosen Übertragungseinrichtungen umfassen;
Bereitstellen eines Internetzugangs zu den Datenbankinformationen für eingetragene Benutzer;
Vorbereiten und Herunterladen von Overlay-Karten mit den höchstzulässigen Energiepegeln (MPE) aus den Datenbankinformationen der standortspezifischen Positionen;
Empfangen einer Anfrage eines eingetragenen Benutzers über Internet, um auf ein Sperrgebiet oder einen Kontrollbereich eines spezifischen Standortes zuzugreifen;
Erteilen eines Passwortes als Reaktion auf die Anfrage für einen Zugang zu dem Sperrgebiet oder dem Kontrollbereich (30), wobei das Passwort notwendig ist, um die Energieemissionen an dem spezifischen Standort wieder aufzunehmen;
Ausgeben eines zertifizierten Berichts, dass während eines bestimmten Zeitraums für den spezifischen Standort für eine standortspezifische Verwaltung als Reaktion auf die Anfrage von dem eingetragenen Benutzer keine Energie emittiert wird; und
Empfangen einer Bestätigung, dass das Sperrgebiet oder der Kontrollbereich (30) für den spezifischen Standort frei von Personal einer anfragenden Partei ist, wobei die Bestätigung ein Passwort umfasst, das verwendet werden kann, um zu überprüfen, ob die anfragende Partei dazu berechtigt ist, die Wiederaufnahme der Energieemissionen an dem spezifischen Standort zu erlauben; und
zertifizieren, dass die Emissionen für den spezifischen Standort wieder aufgenommen werden können, wobei die Zertifizierung, dass die Emissionen für den spezifischen Standort wieder aufgenommen werden können die Überprüfung umfasst, dass das in der Bestätigung bereitgestellte Passwort und das Passwort, das als Reaktion auf die Anfrage ausgegeben wurde, vor einer Zertifizierung, dass die Emissionen für den spezifischen Standort wieder aufgenommen werden können, übereinstimmen.

2. Verfahren nach Anspruch 1, ferner umfassend das Vorbereiten von Simulationsinformationen des elektromagnetischen Energieverlustes (EME) und von Berichten mit Verwendungseigenschaften aus den Datenbankinformationen der standortspezifischen Positionen.

3. Verfahren nach Anspruch 1, ferner umfassend den Schritt des Angebens, dass nach der Beendigung der standortspezifischen Verwaltung Energie an dem spezifischen Standort emittiert werden kann.

4. Verfahren nach Anspruch 1, wobei die MPE-Overlay-Karten Aufriss- und Draufsicht-Ansichten von standortspezifischen Energiemustern umfassen, wobei die Energiemuster Sperrgebiete und Warnzonen (40) umfassen.

5. Verfahren nach Anspruch 2, wobei die Simulationsinformationen des EME-Verlustes ein geografisches Gebiet abdecken, das größer ist als die Overlay-Karten der MPE-Pegel.

6. Verfahren nach Anspruch 1, ferner umfassend den Schritt des täglichen Aktualisierens der Datenbankinformationen.

7. Verfahren nach Anspruch 1, ferner umfassend den Schritt des Aktualisierens der Datenbankinformationen, wenn Änderungen an den Standorten vorgenommen werden, die in der Datenbank enthalten sind.

8. Verfahren nach Anspruch 1, wobei der Zugang für die Benutzer durch geografische Grenzen beschränkt ist.

9. Verfahren nach Anspruch 1, wobei die Benutzer stufenweise gemäß einer geografischen Position kompiliert werden.

10. Verfahren nach Anspruch 1, wobei Zeitpläne an die Benutzer gesendet werden, um neue Daten zur Aufnahme in die Datenbank zu erfassen.

11. Verfahren nach Anspruch 1, wobei eine Dateneintragsseite online verwendet wird, um mindestens eines von einem Benutzernamen, einer staatlichen Lizenznummer oder einer Standortnummer zu erfassen.

12. Verfahren nach Anspruch 1, wobei die MPE-Karten mindestens jeden Träger, eine Einrichtungsposition an dem Standort, einen Kontakt und eine Telefonnummer für eine programmierte oder Notfall-Stromausschaltung identifizieren.

## Revendications

1. Procédé d'utilisation d'un système de stockage et de récupération d'informations pour établir une structure de base de données permettant le stockage et la manipulation d'informations concernant les emplacements et les caractéristiques d'utilisation d'équipements de transmission par radiofréquence (RF), et l'identification et le réglage des émissions d'énergie provenant de ces équipements de transmission afin d'améliorer la sécurité des travailleurs, le procédé comprenant les étapes consistant à :
établir une base de données accessible par ordinateur en stockant des informations d'émissions d'énergie comprenant des emplacements physiques spécifiques à un site et des caractéristiques d'utilisation d'équipements de transmission sans fil ;
fournir un accès internet aux informations de base de données à des utilisateurs enregistrés ;
préparer et télécharger des cartes de superposition avec des niveaux d'énergie maximum autorisés (MPE), à partir des informations de base de données des emplacements spécifiques à un site ;
recevoir une demande d'un utilisateur enregistré par l'intermédiaire d'internet pour accéder à une zone interdite ou une zone à accès restreint d'un site spécifique ;
délivrer un mot de passe en réponse à la demande d'accès à la zone interdite ou à la zone à accès restreint (30), le mot de passe étant nécessaire pour reprendre les émissions d'énergie au niveau du site spécifique ;
délivrer un rapport certifié qu'aucune énergie ne sera émise pendant une certaine période de temps pour le site spécifique pour une gestion spécifique au site, en réponse à la demande provenant de l'utilisateur enregistré ; et
recevoir une confirmation que la zone interdite ou la zone à accès restreint (30) du site spécifique est dégagée de tout personnel d'un tiers demandeur, dans lequel la confirmation comprend un mot de passe qui peut être utilisé pour vérifier si le tiers demandeur est autorisé à permettre la reprise des émissions d'énergie sur le site spécifique ; et
certifier que les émissions pour le site spécifique peuvent reprendre, dans lequel la certification que les émissions pour le site spécifique peuvent reprendre comprend la vérification que le mot de passe fourni dans la confirmation et le mot de passe délivré en réponse à la demande coïncident avant toute certification que les émissions pour le site spécifique peuvent reprendre.

2. Procédé selon la revendication 1, comprenant en outre la préparation d'informations de simulation de dispersion d'énergie électromagnétique (EME) et de rapports de caractéristiques d'utilisation à partir des informations de base de données des emplacements spécifiques à un site.

3. Procédé selon la revendication 1, comprenant en outre l'étape consistant à indiquer que l'énergie peut être émise sur le site spécifique suite à l'achèvement de la gestion spécifique au site.

4. Procédé selon la revendication 1, dans lequel les cartes de superposition MPE comprennent des vues en projection verticale et horizontale de motifs énergétiques spécifiques à un site, dans lequel les motifs énergétiques comprennent des zones interdites et des zones de précaution (40).

5. Procédé selon la revendication 2, dans lequel les informations de simulation de dispersion EME couvrent une zone géographique plus grande que les cartes de superposition de niveaux MPE.

6. Procédé selon la revendication 1, comprenant en outre l'étape consistant à mettre à jour les informations de base de données de façon quotidienne.

7. Procédé selon la revendication 1, comprenant en outre l'étape consistant à mettre à jour les informations de base de données lorsque des changements sont apportés aux sites compris dans la base de données.

8. Procédé selon la revendication 1, dans lequel l'accès pour les utilisateurs est restreint par des limites géographiques.

9. Procédé selon la revendication 1, dans lequel les utilisateurs sont compilés par étages selon un emplacement géographique.

10. Procédé selon la revendication 1, dans lequel des fichiers d'attente sont envoyés aux utilisateurs pour acquérir de nouvelles données à inclure dans la base de données.

11. Procédé selon la revendication 1, dans lequel une page d'entrée de données est utilisée en ligne pour acquérir au moins un élément parmi un nom d'utilisateur, un numéro de licence fédéral ou un numéro de site.

12. Procédé selon la revendication 1, dans lequel les cartes MPE identifient au moins chaque porteuse, une position d'équipement sur le site, un contact et un numéro de téléphone pour une coupure électrique programmée et d'urgence.
